(19) Europäisches Patentamt
European Patent Office
Office européen des brevets

(11) **EP 2 657 534 B1**

(12) **EUROPEAN PATENT SPECIFICATION**

(45) Date of publication and mention of the grant of the patent:
**06.05.2020 Bulletin 2020/19**

(21) Application number: **11851787.9**

(22) Date of filing: **22.12.2011**

(51) Int Cl.:
***F15B 9/08*** *(2006.01)*
***E02F 9/22*** *(2006.01)*
***F02D 29/04*** *(2006.01)*
***E02F 3/96*** *(2006.01)*
***G05D 7/06*** *(2006.01)*

(86) International application number:
**PCT/KR2011/009995**

(87) International publication number:
**WO 2012/087048 (28.06.2012 Gazette 2012/26)**

(54) **METHOD FOR CONTROLLING HYDRAULIC PUMP IN EXCAVATOR**

VERFAHREN ZUR STEUERUNG EINER HYDRAULISCHEN PUMPE IN EINEM BAGGER

PROCÉDÉ DE COMMANDE D’UNE POMPE HYDRAULIQUE DANS UNE EXCAVATRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2010 KR 20100132470**

(43) Date of publication of application:
**30.10.2013 Bulletin 2013/44**

(73) Proprietor: **Doosan Infracore Co., Ltd.**
**Dong-gu**
**Incheon 401-020 (KR)**

(72) Inventor: **BANG, Jai Seok**
**Yongin-si**
**Gyeonggi-do 448-170 (KR)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**EP-A1- 1 830 053**
**EP-A2- 0 457 365**
**EP-A2- 0 761 491**
**WO-A1-98/06936**
**JP-A- H0 742 199**
**JP-A- H1 089 305**
**JP-A- 2007 051 781**
**KR-B1- 950 008 533**
**US-A1- 2007 101 708**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 657 534 B1

Printed by Jouve, 75001 PARIS (FR)

## Description

### [Technical Field]

The present invention relates to a method for controlling a hydraulic pump in an excavator, and more particularly, to a method for controlling a hydraulic pump in an excavator, capable of enabling optimum control of an engine and a pump, in a case of operating an excavator with control options such as a breaker, a crusher, or the like, by allowing the engine to be operated at an engine revolution speed to achieve the best fuel efficiency when a hydraulic pump discharges a flow at a set flow rate predetermined by an operator through an instrument panel.

### [Background Art]

An excavator refers to a construction machine that carries out work such as excavation work for digging into the ground, loading work for conveying soil and sand, destruction work for dismantling buildings, ground leveling work for land grading, or the like, at civil work sites, building sites, and construction sites, and includes: a traveling body which serves to move equipment; an upper revolving body mounted on the traveling body to be rotated 360°; and a front work apparatus including a boom and an arm, which are connected to the upper revolving body to be pivotable, and an option such as a bucket, a breaker, or the like, which is attached to an end portion the arm, and mainly uses hydraulic pressure because a large amount of power is needed to carry out the aforementioned work.

In the excavator of the related art as described above, a method of controlling hydraulic pressure sets a discharge flow rate of a pump within a range for preventing damage to the option in consideration of a maximum revolution speed of an engine at the time of operating the option, and sets an rpm of the engine at which the option may be operated by using an engine rpm command dial in a state in which the discharge flow rate of the pump is set in a range of operating the option by an operator through an instrument panel, and then allows work using the option to be performed.

That is, in the aforementioned method of controlling hydraulic pressure of the excavator, as discharge pressure of the hydraulic pump, a pump regulator uses a pilot signal inputted from an operation means and the higher pressure among set pressures of an electronic proportional pressure reducing valve which controls an option flow rate set by the operator, and the set pressure of the electronic proportional pressure reducing valve is determined by the discharge flow rate of the pump, which is set through the instrument panel, and because the discharge flow rate is a flow rate value when the engine is operated at maximum rating, the discharge flow rate of the pump, which may be set through the instrument panel, is limited by an engine rpm of the engine.

Therefore, in the aforementioned method for controlling hydraulic pressure of the excavator of the related art, because the rpm of the engine needs to be additionally and inconveniently set using an engine rpm command dial in a state in which the discharge flow rate of the pump has been set through the instrument panel, and the discharge flow rate of the pump needs to be set within the limited range of the rpm of the engine, there is a problem in that there is a limitation to set various discharge flow rates of the pump, and therefore work efficiency together with fuel efficiency deteriorate. WO 9806936 A1 discloses a controller for an engine and a hydraulic pump which includes first detection means for detecting a lever operation speed and control means for outputting a command for controlling a revolution speed of the engine to an injection pump and/or a command for controlling a discharge capacity of the hydraulic pump to a regulator so that, on receiving a signal from the first detection means in accordance with an operation speed of the lever operated, a work machine is operated at a speed in accordance with an operation speed of the lever operated, in order that a fuel efficiency of the engine and an efficiency of the hydraulic pump match with each other at a point having an optimum efficiency according to an absorption torque required by the hydraulic pump.

### [Disclosure]

### [Technical Problem]

An embodiment of the present invention has been made in an effort to solve the aforementioned problem, and an embodiment of the present invention is to provide a method for controlling a hydraulic pump in an excavator, capable of enabling optimum control of an engine and a pump, in a case of operating an option of an excavator.

### [Technical Solution]

To this end, an embodiment of the present invention provides a method for controlling a hydraulic pump having the features of claim 1

Here, in the scanning of the engine revolution speed and the required discharge flow rate, the engine revolution speed and the required discharge flow rate may be scanned, by a unit of 10 rpm in a corresponding section having the required discharge flow rate equal to or lower than the required discharge flow rate that refers to the maximum discharge flow rate at which the hydraulic pump of the present excavator may maximally discharge a flow, and the engine revolution speed to achieve high fuel efficiency.

In addition, the maximum flow rate per engine revolution speed may be calculated through Formula 'Q[lpm] = (q[cc/rev]*rpm)/1000'.

**[Effects]**

As described above, an embodiment of the present invention, in a case of operating the option of the excavator, allows the engine to be operated at the engine revolution speed to achieve the best fuel efficiency when the hydraulic pump discharges a flow at a set flow rate predetermined by the operator, thereby enabling optimum control of the engine and the pump, and thus improving work efficiency.

**[Description of Drawings]**

FIG. 1 is a control block diagram schematically illustrating an apparatus for controlling a hydraulic pump to which a method for controlling a hydraulic pump in an excavator according to an exemplary embodiment of the present invention is applied.

FIG. 2 and FIG. 3 are a table illustrating an engine revolution speed and a required discharge flow rate to achieve high fuel efficiency scanned by a controller, and a graph illustrating fuel consumption according to the engine revolution speed on the basis of the table, in the apparatus for controlling a hydraulic pump in an excavator of FIG. 1, respectively.

FIG. 4 is a flow chart illustrating the method for controlling a hydraulic pump in an excavator according to the exemplary embodiment of the present invention.

**[Detailed Description of Certain Inventive Embodiments]**

Hereinafter, an exemplary embodiment of the present invention will be described in detail with reference to the accompanying drawings. Configurations and operational effects according to the configurations of the present invention will be clearly understood from the description below. It should be noted that prior to detailed descriptions of the present invention, specific descriptions regarding publicly known constituent elements, which may obscure the gist of the present invention, will be omitted.

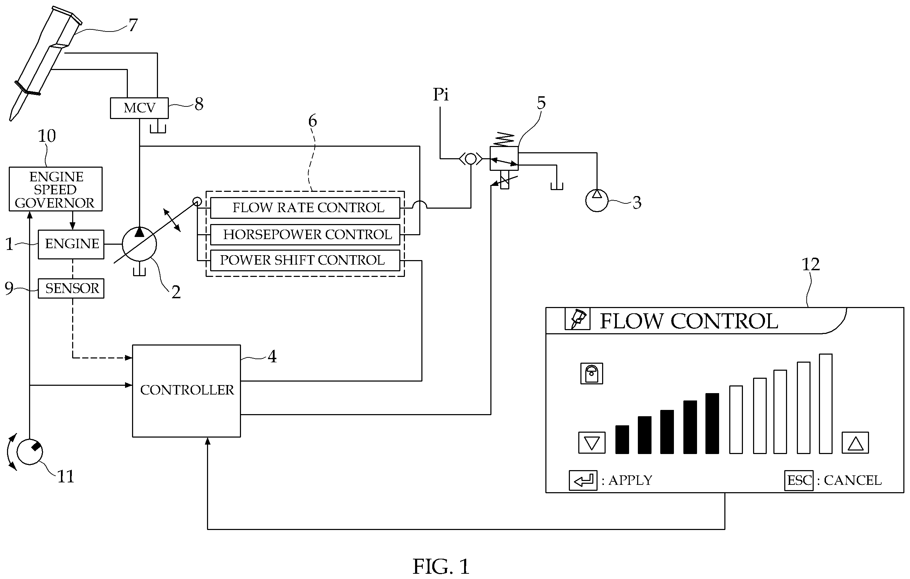

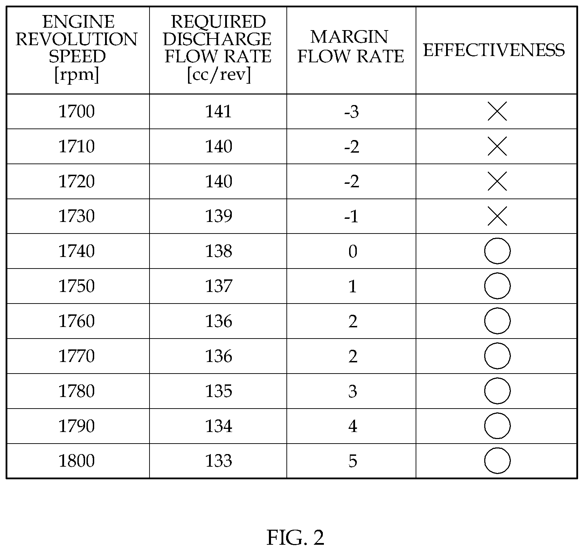

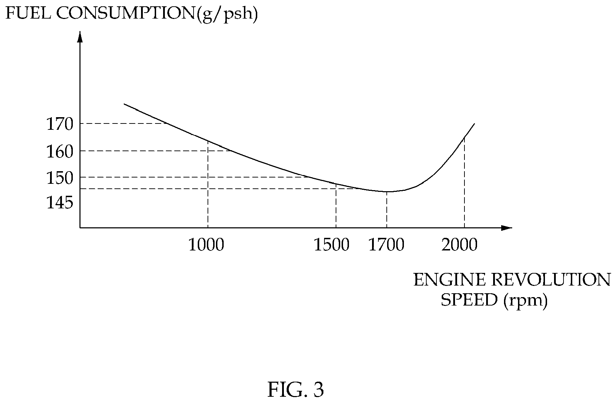

FIG. 1 is a control block diagram schematically illustrating an apparatus for controlling a hydraulic pump to which a method for controlling a hydraulic pump in an excavator according to an exemplary embodiment of the present invention is applied, and FIGS. 2 and 3 are a table illustrating an engine revolution speed and a required discharge flow rate to achieve high fuel efficiency scanned by a controller, and a graph illustrating fuel consumption according to the engine revolution speed on the basis of the table, in the apparatus for controlling a hydraulic pump in an excavator of FIG. 1, respectively.

As illustrated in FIGS. 1 to 3, an apparatus for controlling a hydraulic pump, to which a method for controlling a hydraulic pump in an excavator, according to an exemplary embodiment of the present invention is applied includes: a variable displacement type hydraulic pump 2 which is driven by torque of an engine 1; an electronic proportional control valve 5 which receives pilot pressure from a gear pump 3 that generates the pilot pressure, and a signal current corresponding to option flow rate setting pressure, which controls a discharge flow rate of the hydraulic pump 2, from a controller 4; a pump regulator 6 which is driven by receiving a signal current corresponding to the higher pressure among the pilot pressure and the option flow rate setting pressure, controls a flow rate and hydraulic pressure of the hydraulic pump 2 on the basis of the signal current, and provides a corresponding current to the controller 4; a main control valve 8 which provides the hydraulic pressure supplied from the hydraulic pump 2 to an option 7; an rpm measurement sensor 9 which measures an rpm of the engine 1 and provides the measured rpm to the controller 4; an engine rpm command dial 11 which sets the rpm of the engine 1, provides the rpm to an engine speed governor 10 that drives the engine 1, and provides a signal with respect to the rpm to the controller 4, and the controller 4 calculates a maximum flow rate per engine revolution speed, which has optimum fuel efficiency, by scanning the engine revolution speed and a required discharge flow rate from a section in which fuel efficiency is high, using a table in which required discharge flow rates according to engine revolution speeds are set, so that a flow may be discharged from the hydraulic pump 2 at a discharge flow rate corresponding to a set discharge flow rate of the hydraulic pump 2, which is predetermined by an operator through an instrument panel 12, and then provides the option flow rate setting pressure corresponding to the set discharge flow rate predetermined through the instrument panel 12 to the electronic proportional control valve 5 in order to allow a flow to be discharged from the hydraulic pump 2 at a flow rate corresponding to the set discharge flow rate, and the engine 1 to be driven at an engine revolution speed having optimum fuel efficiency with respect to the set discharge flow rate.

Here, the option 7 refers to a work apparatus including a boom cylinder, an arm cylinder, a bucket cylinder, a turning motor, a breaker, a crusher, or the like, and is typically operated by being supplied with a flow discharged from a pair of hydraulic pumps 2.

The pump regulator 6 controls the discharge flow rate of the hydraulic pump 2 by controlling a stroke of a spool, and the electronic proportional control valve 5 controls the pump regulator 6 while being operated by a signal current of the controller 4 according to frequency modulation or pulse width control so that the flow rate and the hydraulic pressure of the hydraulic pump 2 is controlled.

Meanwhile, the maximum flow rate per engine revolution speed that is calculated by the controller 4 follows Formula 'Q[lpm] = (q[cc/rev]*rpm)/1000', and 'q[cc/rev]' and 'rpm' refer to a required discharge flow rate and an optimum engine revolution speed, respectively, in the table in which required discharge flow rates according to engine revolution speeds are set. In addition, the table in which required discharge flow rates according to engine revolution speeds are set may be set in advance through repeated experiments and calculations, and then stored in a storage means of the controller 4, and the required discharge flow rate refers to a maximum discharge flow rate at which the hydraulic pump 2 of a corresponding excavator may maximally discharge a flow.

As illustrated in FIG. 1, when describing in detail an example of an operation of an excavator that adopts the present invention, the engine 1 is driven by command of the controller 4 at a rated rpm when an operator operates an operation unit in order to perform predetermined work such as excavation work or ground leveling work. Thereafter, the hydraulic pump 2 is driven by the driven engine 1, a discharge flow rate of the hydraulic pump 2 is adjusted by the electronic proportional control valve 5, and the discharge flow rate is controlled by the pump regulator 6 that is driven by a signal current corresponding to higher pressure among the option flow rate setting pressure provided from the controller 4 or the pilot pressure generated by the operation unit.

Here, in a case in which a discharge flow rate of the hydraulic pump 2 is set to a set discharge flow rate by the operator through the instrument panel 12, as illustrated in FIGS. 2 and 3, the controller 4 controls the engine 1 at an engine revolution speed having optimum fuel efficiency in order to allow the engine 1 to operate with optimum fuel efficiency, by scanning the engine revolution speed and the required discharge flow rate, by a unit of 10 rpm of the engine revolution speed, in a section having the required discharge flow rate equal to or lower than a required discharge flow rate that refers to a maximum discharge flow rate at which the hydraulic pump 2 the present excavator may maximally discharge a flow, and the engine revolution speed to achieve high fuel efficiency, using a table that presents engine revolution speeds and required discharge flow rates to achieve high fuel efficiency, and a graph that presents fuel consumption according to the engine revolution speed on the basis of the table, and then by calculating the maximum flow rate per engine revolution speed at which a flow may be discharged at the set discharge flow rate on the basis of the scanning, using Formula 'Q [lpm] = (q [cc/rev]*rpm)/1000'.

Hereinafter, a method for controlling a hydraulic pump in an excavator according to the exemplary embodiment of the present invention will be described with reference to the drawing.

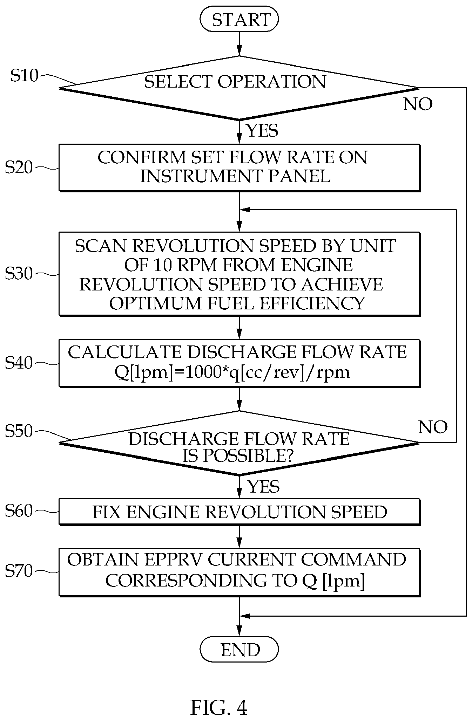

FIG. 4 is a flow chart illustrating a method for controlling a hydraulic pump in an excavator according to the exemplary embodiment of the present invention.

As illustrated in FIG. 4, in a method for controlling a hydraulic pump in an excavator according to the exemplary embodiment of the present invention, first, when an operation with respect to the option 7 such as a breaker or a crusher is selected by the operator through the operation unit (S10), the controller 4 receives a set discharge flow rate of the hydraulic pump 2, which is set by the operator through the instrument panel 12 (S20).

Thereafter, the controller 4 scans the engine revolution speed by a unit of 10 rpm of the engine revolution speed, from a corresponding section having the engine revolution speed to achieve high fuel efficiency, using a table that presents engine revolution speeds and required discharge flow rates to achieve high fuel efficiency, which are stored in a storage means, and a graph that presents fuel consumption according to the engine revolution speed on the basis of the table (S30).

Thereafter, the controller 4 calculates the maximum flow rate per engine revolution speed for each unit through Formula 'Q[lpm] = (q[cc/rev]*rpm)/1000' so that a flow is discharged at the set discharge flow rate set on the instrument panel 12 on the basis of the scanned engine revolution speed for each unit (S40).

Thereafter, the controller 4 determines whether a flow may be discharged at a flow rate according to the calculated engine revolution speed by determining whether the required discharge flow rate corresponding to the calculated engine revolution speed is equal to or lower than the required discharge flow rate that refers to the maximum discharge flow rate at which the hydraulic pump 2 of the present excavator may maximally discharge a flow (S50).

Thereafter, according to the determination result of the controller 4, in a case in which the required discharge flow rate corresponding to the calculated engine revolution speed has a value equal to or lower than the required discharge flow rate at which the hydraulic pump 2 of the present excavator may maximally discharge a flow, the controller 4 controls the engine 1 to have a discharge flow rate closest to the set discharge flow rate set on the instrument panel 12 among the calculated maximum flow rates per engine revolution speed, that is, to have the engine revolution speed having the highest fuel efficiency (S60), and at the same time, outputs a current corresponding to the option flow rate setting pressure corresponding to the calculated maximum flow rate per engine revolution speed (that is, the set discharge flow rate) to the electronic proportional control valve 5 so that the discharge flow rate of the hydraulic pump 2 is controlled (S70).

In step S50, according to the determination result, in a case in which the required discharge flow rate corresponding to the calculated engine revolution speed is higher than the required discharge flow rate at which the hydraulic pump 2 of the present excavator may maximally discharge a flow, the controller 4 performs step S30.

Here, steps S30 to S50 may be substituted with a step in which the engine revolution speed and the required discharge flow rate are simultaneously scanned, by a unit of 10 rpm of the engine revolution speed in a corresponding section having the required discharge flow rate equal to or lower than the required discharge flow rate that refers to the maximum discharge flow rate at which the hydraulic pump 2 of the present excavator may maximally discharge a flow, and the engine revolution speed to achieve high fuel efficiency, and then the maximum flow rate per engine revolution speed for each unit is calculated through Formula 'Q[lpm] = (q[cc/rev]*rpm)/1000' so that a flow is discharged at the set discharge flow rate set on the instrument panel 12 on the basis of the scanned engine revolution speed and required discharge flow rate for each unit.

That is, when describing an example of the method for controlling a hydraulic pump in an excavator through the aforementioned process, in a case in which the set discharge flow rate of the hydraulic pump 2, which is predetermined by the operator through the instrument panel 12, is 240 lpm in a state in which the maximum rated engine revolution speed of the present excavator is 1,800 rpm, and the required discharge flow rate of the hydraulic pump 2 is 138 cc/rev, as illustrated in FIGS. 2 and 3, the controller 4 scans a range satisfying all conditions that the required discharge flow rate is equal to or lower than 138 cc/rev, and the engine revolution speed of the engine 1 to achieve the best fuel efficiency is in a section of around 1700 rpm, by a unit of 10 rpm on the basis of the table and the graph, calculates the maximum flow rate per engine revolution speed, and accordingly, scans 1,740 rpm that is the engine revolution speed at which a flow may be discharged at a flow rate closest to 240 lpm that is the set discharge flow rate, so as to allow the engine 1 to be driven at an engine revolution speed of 1,740 rpm, and at the same time, generates a signal current corresponding to the option flow rate setting pressure to the electronic proportional control valve 5 so that the hydraulic pump 2 may discharge a flow at a flow rate of 240 lpm.

Therefore, as described above, according to the exemplary embodiment of the present invention, in a case of operating one of the options of the excavator, the engine is operated at the engine revolution speed to achieve the best fuel efficiency when the pump discharges a flow at a predetermined flow rate, thereby enabling optimum control of the engine and the pump, and thus improving work efficiency.

## Claims

**1.** A method for controlling a hydraulic pump (2) in an excavator having an operation unit and an instrument panel (12), in which a discharge flow rate of a hydraulic pump (2) is controlled by an electronic proportional control valve (5), and an rpm of an engine (1), which drives the hydraulic pump (2), is controlled by the adjusted discharge flow rate, the method comprising:

receiving, by a controller (4), a set discharge flow rate of the hydraulic pump (2), which is set by an operator through the instrument panel (12), after an operation with respect to one of the plurality of options which are attachable to an end portion of the arm of the excavator is selected by an operator through the operation unit;
scanning, by the controller (4), an engine revolution speed and a required discharge flow rate in a corresponding section having all of the required discharge flow rate equal to or lower than a maximum discharge flow rate at which the hydraulic pump (2) of the present excavator maximally discharges a flow, and an engine revolution speed to achieve high fuel efficiency, using a table that presents engine revolution speeds and required discharge flow rates to achieve high fuel efficiency, which are stored in a storage means, and a relation that presents fuel consumption according to the engine revolution speed on the basis of the table;
calculating, by the controller (4), a maximum flow rate per engine revolution speed so that a flow is discharged through a hydraulic pump (2) at the set discharge flow rate set on the instrument panel (12) on the basis of the scanned engine revolution speed and required discharge flow rate; and
controlling, by the controller (4), the engine (1) to have an engine revolution speed for discharging a flow at a flow rate closest to the set discharge flow rate set on the instrument panel (12) among the calculated maximum flow rates per engine revolution speed, and outputting a signal current corresponding to the calculated maximum flow rate per engine revolution speed to the electronic proportional control valve (5) so that the discharge flow rate of the hydraulic pump (2) is controlled.

2. The method of claim 1, wherein in the scanning of the engine revolution speed and the required discharge flow rate, the engine revolution speed and the required discharge flow rate are scanned, by a unit of 10 rpm in a corresponding section having the required discharge flow rate equal to or lower than the required discharge flow rate that refers to the maximum discharge flow rate at which the hydraulic pump (2) of the present excavator maximally discharges a flow, and the engine revolution speed to achieve high fuel efficiency.

3. The method of claim 1, wherein the maximum flow rate per engine revolution speed is calculated through Formula 'Q[lpm] = (q[cc/rev]*rpm)/1000'.

## Patentansprüche

1. Verfahren zum Steuern einer Hydraulikpumpe (2) in einem Bagger, der eine Bedieneinheit und eine Instrumententafel (12) aufweist, wobei eine Auslassströmungsrate einer Hydraulikpumpe (2) durch ein elektronisches Proportionalsteuerventil (5) gesteuert wird und eine Drehzahl eines Motors (1), der die Hydraulikpumpe (2) antreibt, durch die eingestellte Auslassströmungsrate gesteuert wird, wobei das Verfahren Folgendes umfasst:

   Empfangen, durch eine Steuereinheit (4) einer eingestellten Auslassströmungsrate der Hydraulikpumpe (2), die durch einen Bediener über die Instrumententafel (12) eingestellt wird, nachdem eine Operation in Bezug auf ein der mehrere Anbaugeräte, die an einem Endabschnitt des Arms des Baggers angebracht werden können, durch einen Bediener über die Betriebseinheit ausgewählt wurde;
   Abtasten, durch den Controller (4), einer Motordrehzahl und einer erforderlichen Auslassströmungsrate in einer entsprechenden Sektion, in der die gesamte erforderliche Auslassströmungsrate nicht größer ist als eine maximale Auslassströmungsrate, mit der die Hydraulikpumpe (2) des Baggers maximal eine Fluidströmung ausgibt, und einer Motordrehzahl, um eine hohe Kraftstoffeffizienz zu erreichen, unter Verwendung einer Tabelle, die Motordrehzahlen und erforderliche Auslassströmungsraten zur Erreichung einer hohen Kraftstoffeffizienz darstellt, die in einem Speichermittel gespeichert sind, und einer Beziehung, die den Kraftstoffverbrauch gemäß der Motordrehzahl auf der Grundlage der Tabelle darstellt;
   Berechnen, durch den Controller (4), einer maximalen Durchflussmenge pro Motordrehzahl, so dass eine Fluidströmung durch eine Hydraulikpumpe (2) mit der an der Instrumententafel (12) eingestellten Auslassdurchflussmenge auf der Grundlage der abgetasteten Motordrehzahl und der erforderlichen Auslassdurchflussmenge abgegeben wird; und
   Steuern, durch den Controller (4), des Motors (1) so, dass er eine Motordrehzahl zum Ausgeben einer Fluidströmung mit einer Strömungsrate hat, die der an der Instrumententafel (12) eingestellten Auslassdurchflussmenge unter den berechneten maximalen Strömungsraten pro Motordrehzahl am nächsten kommt, und Ausgeben eines Signalstroms, der der berechneten maximalen Strömungsrate pro Motordrehzahl entspricht, an das elektronische Proportionalsteuerventil (5), so dass die Auslassdurchflussmenge der Hydraulikpumpe (2) gesteuert wird.

2. Verfahren nach Anspruch 1, wobei bei der Abtastung der Motordrehzahl und der erforderlichen Auslassströmungsrate die Motordrehzahl und die erforderliche Auslassströmungsrate um eine Einheit von 10 U/min in einer entsprechenden Sektion abgetastet werden, in der die erforderliche Auslassströmungsrate nicht größer ist als die erforderliche Auslassströmungsrate, die sich auf die maximale Auslassströmungsrate, bei der die Hydraulikpumpe (2) des Baggers eine maximale Fluidströmung abgibt, und die Motordrehzahl, bei der eine hohe Kraftstoffeffizienz erreicht wird, bezieht.

3. Verfahren nach Anspruch 1, wobei die maximale Durchflussmenge pro Motordrehzahl durch die Formel "Q[lpm] = (q[cc/Umdrehung]*U/min)/1000" berechnet wird.

## Revendications

1. Procédé de commande d'une pompe hydraulique (2) dans une pelle comportant une unité de commande et un tableau de bord (12), dans lequel un débit de refoulement d'une pompe hydraulique (2) est régulé par une vanne de régulation proportionnelle électronique (5), et un régime de moteur (1) qui entraîne la pompe hydraulique (2) est régulé par le débit de refoulement ajusté, le procédé comprenant les étapes suivantes :

recevoir, au moyen d'un dispositif de commande (4), un débit de refoulement de consigne de la pompe hydraulique (2), qui est réglé par un opérateur par le biais du tableau de bord (12), après qu'une opération se rapportant à une option de la pluralité d'options qui peuvent être fixées à une partie d'extrémité du bras de la pelle a été sélectionnée par l'opérateur par le biais de l'unité de commande ;
balayer, au moyen du dispositif de commande (4), une vitesse de rotation de moteur et un débit de refoulement requis dans une section correspondante ayant la totalité du débit de refoulement requis inférieure ou égale à un débit de refoulement maximum auquel la pompe hydraulique (2) de la présente pelle refoule un flux au maximum, et une vitesse de rotation de moteur permettant d'assurer un haut rendement du carburant, à l'aide d'une table qui présente des vitesses de rotation de moteur et des débits de refoulement requis permettant d'assurer un haut rendement du carburant, qui sont stockés dans un moyen de stockage, et une relation qui présente une consommation de carburant en fonction de la vitesse de rotation de moteur sur la base de la table ;
calculer, au moyen du dispositif de commande (4), un débit maximum par unité de vitesse de rotation de moteur, de manière qu'un flux soit refoulé par une pompe hydraulique (2) au débit de refoulement de consigne, réglé sur le tableau de bord (12) sur la base de la vitesse de rotation de moteur et du débit de refoulement requis balayés ; et
commander, au moyen du dispositif de commande (4), le moteur (1) pour obtenir une vitesse de rotation de moteur permettant de refouler un flux au débit le plus proche du débit de refoulement de consigne réglé sur le tableau de bord (12) parmi les débits maxima par unité de vitesse de rotation de moteur calculés, et délivrer en sortie un courant de signal correspondant au débit maximum par unité de vitesse de rotation de moteur calculé, à la vanne de régulation proportionnelle électronique (5) de manière à réguler le débit de refoulement de la pompe hydraulique (2).

**2.** Procédé selon la revendication 1, dans lequel, lors du balayage de la vitesse de rotation de moteur et du débit de refoulement requis, la vitesse de rotation de moteur et le débit de refoulement requis sont balayés par unité de 10 tr/min dans une section correspondante ayant le débit de refoulement requis inférieur ou égal au débit de refoulement requis qui se rapporte au débit de refoulement maximum auquel la pompe hydraulique (2) de la présente pelle refoule un flux au maximum, et la vitesse de rotation de moteur permettant d'assurer un haut rendement du carburant.

**3.** Procédé selon la revendication 1, dans lequel le débit maximum par unité de vitesse de rotation de moteur est calculé au moyen de la formule :

« Q [1pm] = (q [cc/tr] * tr/min) / 1000 ».

12
FLOW CONTROL
: APPLY
ESC : CANCEL
3
5
Pi
6
FLOW RATE CONTROL
HORSEPOWER CONTROL
POWER SHIFT CONTROL
4
CONTROLLER
8
MCV
7
2
10
ENGINE SPEED GOVERNOR
ENGINE
SENSOR
1
9
11

FIG. 1

| ENGINE REVOLUTION SPEED [rpm] | REQUIRED DISCHARGE FLOW RATE [cc/rev] | MARGIN FLOW RATE | EFFECTIVENESS |
|---|---|---|---|
| 1700 | 141 | -3 | × |
| 1710 | 140 | -2 | × |
| 1720 | 140 | -2 | × |
| 1730 | 139 | -1 | × |
| 1740 | 138 | 0 | ○ |
| 1750 | 137 | 1 | ○ |
| 1760 | 136 | 2 | ○ |
| 1770 | 136 | 2 | ○ |
| 1780 | 135 | 3 | ○ |
| 1790 | 134 | 4 | ○ |
| 1800 | 133 | 5 | ○ |

FIG. 2

FUEL CONSUMPTION(g/psh)
170
160
150
145
1000
1500
1700
2000
ENGINE REVOLUTION SPEED (rpm)

FIG. 3

START
S10
SELECT OPERATION
NO
YES
S20
CONFIRM SET FLOW RATE ON INSTRUMENT PANEL
S30
SCAN REVOLUTION SPEED BY UNIT OF 10 RPM FROM ENGINE REVOLUTION SPEED TO ACHIEVE OPTIMUM FUEL EFFICIENCY
S40
CALCULATE DISCHARGE FLOW RATE Q[lpm]=1000*q[cc/rev]/rpm
S50
DISCHARGE FLOW RATE IS POSSIBLE?
NO
YES
S60
FIX ENGINE REVOLUTION SPEED
S70
OBTAIN EPPRV CURRENT COMMAND CORRESPONDING TO Q [lpm]
END

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9806936 A1